# EUROPÄISCHE PATENTSCHRIFT

(11) **EP 3 035 497 B1**
(45) Veröffentlichungstag und Bekanntmachung des Hinweises auf die Patenterteilung: **21.07.2021**
(21) Anmeldenummer: 14198704.0
(22) Anmeldetag: 17.12.2014
(51) Int. Cl.: E05F 15/608, H02K 21/22, H02K 3/52, H02K 1/27, H02K 1/14

(54) **Karusselltür**
Revolving door
Porte à tambour

(43) Veröffentlichungstag der Anmeldung: 22.06.2016
(73) Patentinhaber: dormakaba Deutschland GmbH, 58256 Ennepetal (DE)
(72) Erfinder: Fabri, Daniel, 58256 Ennepetal (DE); Busch, Sven, 58256 Ennepetal (DE)
(74) Vertreter: Balder IP Law, S.L.

(56) Entgegenhaltungen:
- EP-A2- 2 713 479
- EP-A2- 2 755 305
- None

## Beschreibung

Die Erfindung betrifft eine Karusselltür mit einem kompakten elektrischen Antrieb.

Bekannt sind Karusselltürantriebe die einen Asynchronmotor mit nachgeschaltetem Getriebe aufweisen. Hierbei kommt typischer Weise ein mehrstufiges Getriebe (Schneckenradgetriebe, Zahnriemenstufen) zum Einsatz. Beispielsweise aus EP 2 072 737 A2 ist ein Antrieb für eine Karusselltür bekannt, wobei das Drehmoment eines herkömmlichen elektrischen Antriebes über ein Umlenkgetriebe auf die Karusselltür übertragen wird.

Eine Karusselltür gemäß dem Oberbegriff des Anspruchs 1 ist außerdem aus der EP 2 755 305 A2 bekannt.

Es ist Aufgabe vorliegender Erfindung eine Karusselltür anzugeben, die bei kostengünstiger Herstellung und Montage einen kompakten Antrieb mit hoher Leistungsdichte und flexiblen Einsatzmöglichkeiten für unterschiedlichen Karusselltürvarianten umfasst.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Karusselltür umfassend ein Drehkreuz mit zumindest zwei Türflügeln, wobei das Drehkreuz um eine Drehachse drehbar ist, wobei entlang der Drehachse eine Axialrichtung und senkrecht zur Axialrichtung eine Radialrichtung definiert sind, und einen elektrischen Antrieb, ausgebildet als elektronisch kommutierter Vielpolmotor mit einem Stator und einem Rotor. Der Stator umfasst ein Statorblechpaket und mehrere Spulen. Der Rotor umfasst ein Rotorblechpaket und mehrere Permanentmagneten. Der Rotor ist koaxial zur Drehachse angeordnet, und mit dem Drehkreuz zum direkten, getriebelosen Antrieb verbunden.

Erfindungsgemäß wurde erkannt, dass durch einen elektronisch kommutierten Vielpolmotor ein sehr kompakter und wartungsarmer Antrieb für eine Karusselltür möglich ist. Die entsprechend hohe Leistungsdichte des Antriebs wird erreicht durch die Verwendung von Blechpaketen für den Stator und für den Rotor.

Im Folgenden werden einige Begriffe zur erfindungsgemäßen Karusselltür definiert: Das Drehkreuz einer Karusselltür umfasst üblicherweise mehrere Türflügel, die sternförmig zur Drehachse angeordnet sind. Der Drehkreuzdurchmesser A ist dabei der größte Durchmesser des Kreises, den diese Türflügel beim Drehen des Drehkreuzes überstreichen. Entlang der Drehachse ist die Axialrichtung der Karusselltür definiert. Senkrecht zu dieser Axialrichtung steht die Radialrichtung. Um die Axialrichtung ist die Umfangsrichtung definiert.

Der Antrieb, ausgebildet als Vielpolmotor, weist einen Stator mit einer gewissen Spulenanzahl F auf. Der Statordurchmesser M wird bis zum radial äußeren Ende des Statorblechpaketes gemessen. Der Rotor umfasst ein Rotorblechpaket, das auf einer Rotorscheibe montiert ist. Ebenso umfasst der Stator eine Statorscheibe, wobei auf der Statorscheibe ein Statorblechpaket montiert ist. Die Statorscheibe kann aus mehreren Scheibenblechen zusammengesetzt sein. Die Statorscheibe und die Rotorscheibe liegen gegenüber, so dass zwischen den beiden Scheiben die Statorblechpakete und die Rotorblechpakete angeordnet sind.

Im Rotor sind radial innen am Rotorblechpacket mehrere Permanentmagneten angeordnet. Der Rotordurchmesser B ist bis zu dem radial äußeren Ende des Rotorblechpaketes definiert. Eine Antriebshöhe C des elektrischen Antriebes wird in Axialrichtung von einer äußeren Seite der Statorscheibe bis zu einer äußeren Seite der Rotorscheibe gemessen.

Bevorzugt ist die Karusselltür nach einer Karusselltürrastzahl D konstruiert. Diese ist definiert als Verhältnis aus maximaler kinetischer Energie des Drehkreuzes zum Rastmoment des Antriebs bei einer Umfangsgeschwindigkeit des Drehkreuzes von 0,25 m/s, wobei die Karusselltürrastzahl D zumindest 0,01, vorzugsweise zumindest 0,02, besonders vorzugsweise zumindest 0,03, beträgt.

Ein geringes Rastmoment des Vielpolmotors ist entscheidend für einen vibrationsarmen und somit leisen Betrieb bei gleichförmigem Lauf der Karusselltür. Neben dem geringen Rastmoment muss der elektrische Antrieb jedoch auch ein ausreichendes Antriebsmoment für den Betrieb der Karusselltür bereitstellen. Entscheidend für das benötigte Antriebsmoment ist die Masse des Drehkreuzes inkl. der Türflügel. Ein kritisches hohes Rastmoment des Antriebs wirkt sich besonders negativ bei kleinen Geschwindigkeiten und kleinen Massen aus. So wird hier die minimale Umfangsgeschwindigkeit an den radial äußeren Enden der Türflügel betrachtet. Diese Umfangsgeschwindigkeit liegt für die Begehung durch Personen mit Handicap bei zumindest 0,25 m/s.

Entscheidend für die Masse des Drehkreuzes ist sowohl der Drehkreuzdurchmesser, die Höhe der Türflügel, als auch die Bauart. Allerdings werden aus Wirtschaftlichkeitsgründen die Antriebe für Karusselltüren nicht für jede mögliche Flügeltürhöhe und Bauart separat entwickelt, sondern es bedarf einer vernünftigen Konstruktion eines Antriebes, der an unterschiedlichen Drehkreuzen verwendet wird. In erster Linie unterscheiden sich unterschiedliche Karusselltüren durch ihren Drehkreuzdurchmesser, sodass auch die Antriebe jeweils für eine gewisse Spanne an unterschiedlichen Drehkreuzdurchmessern entwickelt werden. Des Weiteren muss beachtet werden, dass die Optimierung des elektrischen Antriebes hinsichtlich des Rastmomentes wiederum von dem verwendeten Drehkreuz abhängt.

So wurde im Rahmen der Erfindung erkannt, dass zur Konstruktion der Karusselltür und der Auslegung des Antriebs sich eine Karusselltürrastzahl D eignet, die im Wesentlichen einen Zusammenhang zwischen dem Rastmoment des Antriebes und dem Drehkreuzdurchmesser A wiedergibt. Dabei wurde insbesondere beachtet, dass die Masse des Drehkreuzes im Wesentlichen durch den Drehkreuzdurchmesser A bestimmt wird und je kleiner die Masse des Drehkreuzes ist und je langsamer das Drehkreuz dreht, desto größer der negative Einfluss eines hohen Rastmomentes ist. Anhand der Karusselltürrastzahl D kann also bestimmt werden, ob das Rastmoment des Antriebs in einem akzeptablen Bereich für ein bestimmtes Drehkreuz liegt und so die Anforderungen an einen vibrationsarmen und leisen Betrieb erfüllt sind.

Die Karusselltür ist gekennzeichnet durch einen Auslegungskoeffizienten E, wobei gilt A/B=E*F/U, mit Drehkreuzdurchmesser A, Rotordurchmesser B, Spulenanzahl F und Magnetanzahl U, wobei der Auslegungskoeffizient E zumindest 3, vorzugsweise zumindest 4, beträgt, und wobei der Auslegungskoeffizient E höchstens 13, vorzugsweise höchstens 11, beträgt.

Herkömmliche Karusselltüren werden über Elektromotoren und Getriebe angetrieben. Diese Baugruppe aus Elektromotor und Getriebe ist relativ hochbauend. Der Vorteil des Vielpolmotors hingegen ist, dass er relativ flach konstruiert werden kann. Dadurch ergeben sich erhebliche gestalterische Freiheiten bezüglich des Deckenaufbaues über der Karusselltür. Entscheidend für den flachen Aufbau des Antriebes ist die richtige Auslegung des Rotordurchmesser B für den entsprechenden Drehkreuzdurchmesser A, wobei neben dem Rotordurchmesser B auch die Spulenanzahl F und die Magnetanzahl U an den Drehkreuzdurchmesser A angepasst werden müssen. Der Drehkreuzdurchmesser A beeinflusst nämlich wesentlich die Masse des Drehkreuzes und bestimmt somit das nötige Antriebsmoment. Der Rotordurchmesser B gibt im Wesentlichen den Gesamtdurchmesser des elektrischen Antriebs an. In Abhängigkeit des Rotordurchmessers B verändert sich somit der Bauraum und somit die Spulenanzahl F und Magnetanzahl U.

Die Auswahl von Rotordurchmesser B, Spulenanzahl F und Magnetanzahl U beeinflusst indirekt die Antriebshöhe C und somit die maximale Bauhöhe. So gibt es nach der Formel A/B=E*F/U mit dem Auslegungskoeffizienten E eine gute Möglichkeit zur Dimensionierung des elektrischen Antriebs im Verhältnis zum Drehkreuzdurchmesser A.

Die Karusselltür ist auch gekennzeichnet durch ein Verhältnis F/A der Spulenanzahl F zum Drehkreuzdurchmesser A, wobei das Verhältnis F/A zumindest 10 Stück/m (Stück pro Meter) vorzugsweise zumindest 12 Stück/m, beträgt, und wobei das Verhältnis F/A höchstens 35 Stück/m, vorzugsweise höchstens 30 Stück/m, beträgt.

Die verwendete Spulenanzahl F im Stator ist ausschlaggebend für das gewünschte Drehmoment. Allerdings muss auch beachtet werden, dass mit einer größeren Spulenanzahl der Rotordurchmesser B und somit der Durchmesser des Antriebs zunimmt. Jedoch ist ein Antrieb mit relativ geringem Durchmesser wünschenswert, da dieser mehr gestalterische Freiheiten zulässt. So kann beispielsweise bei einem Antrieb mit geringem Durchmesser eine optisch ansprechende Glasdecke über der Karusselltür verwendet werden. Es bedarf somit einer Abwägung zwischen der verwendeten Spulenanzahl F und dem dazu passenden Drehkreuzdurchmesser A. Das bevorzugte Verhältnis F/A zeigt eine sinnvolle, in Versuchen bestimmte Abwägung zwischen diesen Zielkonflikten.

Ferner ist die Karusselltür bevorzugt gekennzeichnet durch ein Verhältnis B/A des Rotordurchmessers B zum Drehkreuzdurchmesser A, wobei das Verhältnis B/A zumindest 1/15, vorzugsweise zumindest 1/10, besonders vorzugsweise zumindest 1/8, beträgt, und wobei das Verhältnis B/A höchstens 1/2, vorzugsweise höchsten 1/3, besonders vorzugsweise höchsten 1/4, beträgt.

Der Rotordurchmesser B bestimmt entscheidend die Baugröße des Antriebs in der Ebene senkrecht zur Drehachse. Je größer der Rotordurchmesser B gewählt wird, desto einfacher ist es, mit dem Antrieb das entsprechende Antriebsmoment für das Drehkreuz aufzubringen. Das benötige Antriebsmoment ist dabei entscheidend abhängig vom Drehkreuzdurchmesser A: Der Drehkreuzdurchmesser A bestimmt nämlich wesentlich die Masse der Türe.

Ferner ist zu beachten, dass der Antrieb nicht beliebig groß gebaut werden soll, da für eine möglichst große gestalterische Freiheit der Karusselltür, beispielsweise der Decke über dem Drehkreuz, ein Antrieb mit möglichst kleinem Rotordurchmesser B wünschenswert ist. So kann bei einem sehr kleinen Rotordurchmesser B eine transparente Decke der Karusselltür mit Glaselementen optisch ansprechend gestaltet werden. Diese Zielkonflikte bestimmen somit das Verhältnis B/A des Rotordurchmessers B zum Drehkreuzdurchmesser A, wobei die angegebenen Zahlenwerte einen guten Kompromiss für die Auslegung des Vielpolmotors angeben.

Des Weiteren ist bevorzugt vorgesehen, dass das Statorblechpaket einen geschlossenen Ring und radiale Zähne zum Aufstecken der Spulen umfasst, wobei das Statorblechpaket aus mehreren gestapelten Statorringen zusammengesetzt ist, und wobei der einzelne Statorring aus mehreren in Umfangsrichtung nebeneinander angeordneten Statorsegmenten zusammengesetzt ist.

Das Statorblechpaket umfasst bevorzugt einen geschlossenen Ring, an dem in Radialrichtung mehrere Zähne ausgebildet sind. Dabei ist das Statorblechpaket aus mehreren gestapelten Statorringen zusammengesetzt. Die einzelnen Statorringe sind in Axialrichtung übereinander gestapelt. Auf die Zähne des Statorblechpaketes wird jeweils eine Spule aufgesteckt. Die einzelnen Statorringe bilden sowohl einen Teil der Zähne als auch einen Teil des geschlossenen Rings. Die Zähne bilden dabei den Eisenkern der aufgesteckten Spulen und dienen gleichzeitig zur Positionierung und Fixierung der Spulen im Stator. Der einzelne Statorring ist bevorzugt in mehrere Statorsegmente unterteilt. In Umfangsrichtung werden die Statorsegmente aneinander gesetzt, so dass beispielsweise drei, vier oder fünf Statorsegmente einen Statorring bilden.

Ferner ist bevorzugt vorgesehen, dass das Rotorblechpaket mehrere gestapelte Rotorringe umfasst, wobei der einzelne Rotorring aus mehreren in Umfangsrichtung nebeneinander angeordneten Rotorsegmenten zusammengesetzt ist, und wobei an der radialen Innenseite des Rotorblechpaketes die Permanentmagneten angeordnet sind.

Das Rotorblechpaket ist als geschlossener Ring gestaltet, an dessen radialer Innenseite die Permanentmagneten angeordnet sind. Dabei ist das Rotorblechpaket bevorzugt aus mehreren gestapelten Rotorringen zusammengesetzt. Die einzelnen Rotorringe sind in Axialrichtung übereinander gestapelt. Der einzelne Rotorring ist bevorzugt in mehrere Rotorsegmente unterteilt. In Umfangsrichtung werden die Rotorsegmente aneinander gesetzt, so dass beispielsweise drei, vier oder fünf Rotorsegmente einen Rotorring bilden.

Für Stator und Rotor werden einzelne Bleche für die Segmente verwendet. Diese Bleche sind einfach zu fertigen und stellen keine großen und schweren Einzelteile dar. Die einzelnen Segmente können sehr einfach und mit einem geringen Verschnitt aus einem Blech geschnitten oder gestanzt werden. Des Weiteren sind die einzelnen Segmente sehr leicht und somit bei der Montage einfach zu handhaben. Dadurch ist die Montage des Statorblechpaketes bzw. Rotorblechpaketes einfach zu bewerkstelligen.

Insbesondere ist vorgesehen dass die Statorsegmente versetzt zueinander angeordnet sind, sodass die Stöße zwischen zwei Statorsegmenten in einem Statorring nicht mit den Stößen des benachbarten Statorrings überlappen, wobei vorzugsweise die Teilung der Statorringe so gewählt ist, dass die Stöße zwischen den Statorsegmenten in den Zähnen liegen.

Zusätzlich oder alternativ ist insbesondere vorgesehen, dass die Rotorsegmente versetzt zueinander angeordnet sind, sodass die Stöße zwischen zwei Rotorsegmenten in einem Rotorring nicht mit den Stößen des benachbarten Rotorrings überlappen.

Dabei wird insbesondere eine gleichmäßige Anordnung und somit ein gleichmäßiger Versatz der einzelnen Stöße in den unterschiedlichen Ringen des Stators und/oder Rotors gewählt. Die Stöße zwischen den Segmenten bilden gewisse Störstellen für den magnetischen Fluss. Je gleichmäßiger diese Stöße im Blechpaket verteilt sind, desto gleichmäßiger ist somit auch der magnetische Fluss. Gleichzeitig wird dadurch eine Verringerung der Rastkräfte erreicht. Ferner ermöglicht der Versatz der Stöße einen stabilen Verbund der einzelnen Stator- bzw. Rotorsegmente.

Des Weiteren ist bevorzugt vorgesehen, dass die Teilung der Statorringe in die einzelnen Statorsegmente so gewählt ist, dass die Stöße zwischen zwei benachbarten Statorsegmenten in den Zähnen liegen. In den Zähnen ist der negative Einfluss auf den magnetischen Fluss bzw. auf die Rastkräfte durch die Stöße geringer, als wenn die Stöße zwischen den Zähnen im geschlossenen Ring angeordnet wären. Ferner ist bevorzugt vorgesehen, dass die Stöße mittig in den Zähnen liegen und sich geradlinig, radial erstrecken. Durch die mittige und geradlinige Anordnung können die einzelnen Statorsegmente einfach gefertigt werden. Des Weiteren ist so eine spiegelsymmetrische Konstruktion des einzelnen Statorsegments möglich. Die Spiegelsymmetrie ermöglicht eine prozesssichere Montage und die Verwendung möglichst vieler gleicher Statorsegmente.

Des Weiteren ist bevorzugt vorgesehen, dass die Teilung der Rotorringe in die einzelnen Rotorsegmente so gewählt ist, dass die Stöße zwischen zwei benachbarten Rotorsegmenten von einem Permanentmagneten überdeckt sind. Insbesondere liegen die Stöße mittig bezüglich der Permanentmagneten. Durch diese Anordnung ist der negative Einfluss auf den magnetischen Fluss bzw. auf die Rastkräfte durch die Stöße geringer, als wenn die Stöße zwischen den Permanentmagneten angeordnet wären. Zwischen den Permanentmagneten befindet sich das größte Feld, deshalb befindet sich die Teilung der Rotorsegmente in der Mitte des Permanentmagneten. Durch die mittige Anordnung können die einzelnen Rotorsegmente einfach gefertigt werden. Des Weiteren ist so eine spiegelsymmetrische Konstruktion des einzelnen Rotorsegments möglich. Die Spiegelsymmetrie ermöglicht die Verwendung möglichst vieler gleicher Rotorsegmente.

Die Statorsegmentanzahl G pro Statorring bzw. die Rotorsegmentanzahl N pro Rotorring beträgt vorteilhafterweise zumindest zwei, vorzugsweise zumindest drei, besonders vorzugsweise zumindest vier, und bevorzugt höchsten 10. Durch diese Unterteilung der Statorringe oder Rotorring in die einzelnen Segmente, ergibt sich ein gutes Zusammenspiel aus den Anforderungen nach möglichst kleinen, einfach zu montierenden Bauteilen und möglichst wenig störenden Einflüssen durch die Stöße zwischen den einzelnen Segmenten.

Bevorzugt ist vorgesehen dass jedes Statorsegment, zumindest im unmontierten Zustand, einen Segmentwinkel H aufweist, wobei gilt H=(360°/G)-I, mit Statorsegmentanzahl G und Reduktionswinkel I. Zusätzlich oder alternativ ist vorgesehen, dass jedes Rotorsegment, zumindest im unmontierten Zustand, einen Segmentwinkel H aufweist, wobei gilt H=(360°/N)-I, mit Rotorsegmentanzahl N und Reduktionswinkel I.

In beiden Fällen liegt der der Reduktionswinkel I bevorzugt zwischen 0,05° und 1 °, vorzugsweise zwischen 0,1° und 0,8°.

Bevorzugt ist als vorgesehen, dass der Segmentwinkel H, den ein einzelnes Segment abdeckt, geringfügig kleiner ist als 360°/Segmentanzahl (G oder N). Dabei ist das einzelne Segment um einen Reduktionswinkel I kleiner.

Bei der Montage der Statorsegmente auf der Statorscheibe, werden die Statorsegmente mithilfe einer speziellen Montagevorrichtung positioniert und montiert. Deshalb können die einzelnen Statorsegmente geringfügig kleiner als 360°/Statorsegmentanzahl G sein und mit relativ großen Toleranzen gefertigt werden. Bei der Montage der Rotorsegmente auf der Rotorscheibe, werden die Rotorsegmente auch mithilfe einer speziellen Montagevorrichtung positioniert und montiert. Deshalb können die einzelnen Rotorsegmente geringfügig kleiner als 360°/Statorsegmentanzahl G sein und mit relativ großen Toleranzen gefertigt werden.

Bevorzugt ist vorgesehen, dass die Statorsegmente mehrerer Statorringe die gleiche Blechstärke und/oder die gleiche Geometrie und/oder den gleichen Segmentwinkel H aufweisen, wobei die Statorsegmente vorzugsweise spiegelsymmetrisch sind. Zusätzlich oder alternativ ist vorgesehen, dass die Rotorsegmente mehrerer Rotorringe die gleiche Blechstärke und/oder die gleiche Geometrie und/oder den gleichen Segmentwinkel H aufweisen, wobei die Rotorsegmente vorzugsweise spiegelsymmetrisch sind.

Bevorzugt werden zum Aufbau des Statorblechpaketes und/oder Rotorblechpaketes möglichst viele Gleichteile verwendet. Deshalb ist bevorzugt vorgesehen, dass die Segmente, insbesondere die Segmente aller Statorringe oder Rotorringe, die gleiche Blechstärke und/oder die gleiche Geometrie und/oder den gleichen Segmentwinkel H aufweisen. Die "gleiche Geometrie" bedeutet nicht nur dieselbe Form, sondern auch dieselben Maße. Bevorzugt sind mehrere Segmente, vorzugsweise alle Segmente, spiegelsymmetrisch aufgebaut. Dadurch können die Segmente bei der Montage der Blechpakete in jeglicher Lage montiert werden.

Die einzelnen Statorsegmente sind vorteilhafterweise einstückig gefertigte Bauteile aus Blech. Das einzelne Statorsegment bildet dabei einen Teil des geschlossenen Rings des Statorblechpaketes, als auch einen Teil mehrerer Zähne. Das einzelne Statorsegment ist somit kammförmig gestaltet.

Die Statorsegmente und/oder Rotorsegmente sind vorzugsweise aus Baustahl gefertigt. Für die Herstellung der Segmente muss kein hochwertiger Stahl, wie beispielsweise Elektroblech, verwendet werden. Charakteristisch bei der Karusselltür ist eine relativ niedrige Drehzahl, wodurch sehr geringe Wirbelströme auftreten. Aufgrund dieser geringen Wirbelströme kann der Antrieb für die Karusselltür mit herkömmlichem Baustahl, anstatt Elektroblech, gebaut werden.

Bevorzugt ist vorgesehen, dass die Köpfe der Zähne mit einem Kopfradius K verrundet sind, wobei der Kopfradius K in einer zur Drehachse senkrechten Ebene liegt, und wobei der Kopfradius K zumindest 30mm, vorzugsweise zumindest 40mm, beträgt.

Bevorzugt ist vorgesehen, dass die Ecken der Köpfe der Zähne mit einem Eckenradius T verrundet sind, wobei der Eckenradius T in einer zur Drehachse senkrechten Ebene liegt, wobei der Eckenradius T zumindest 0,5mm , vorzugsweise zumindest 1mm, besonders vorzugsweise zumindest 1,5mm, beträgt, und/oder wobei der Eckenradius T höchstens 5mm, vorzugsweise höchsten 4mm, besonders vorzugsweise höchsten 3,5mm, beträgt.

Bevorzugt ist vorgesehen, dass die Zähne am Kopf eine Zahnbreite L aufweisen, wobei die Zahnbreite L in Umfangsrichtung definiert ist, wobei die Zahnbreite L zumindest 8mm, vorzugsweise zumindest 10mm, besonders vorzugsweise zumindest 12mm, beträgt, und/oder wobei die Zahnbreite L höchstens 20mm, vorzugsweise höchsten 18mm, besonders vorzugsweise höchsten 16mm, beträgt.

Im Rahmen der Erfindung wurde anhand von Versuchen herausgefunden, dass ein entsprechender Kopfradius K oder Eckenradius T oder eine entsprechende Zahnbreite L sich sehr positiv auf die Reduktion des Rastmomentes auswirken. Der Kopfradius K und Eckenradius T sind dabei in einer zur Drehachse senkrechten Ebene definiert. Die Verrundung in dieser Ebene kann direkt beim Ausschneiden oder Ausstanzen der Bleche berücksichtigt werden. Im Rahmen der Erfindung wurde festgestellt, dass für eine optimale Reduktion des Rastmomentes die angegebenen Größen für den Kopfradius K und/oder den Eckenradius T und/oder die Zahnbreite L gewählt werden sollten. Dabei werden auch akzeptable Werte für das Rastmoment erreicht, wenn nur der Kopfradius K oder nur der Eckenradius T oder nur die Zahnbreite L in den bevorzugt vorgesehenen Wertebereichen liegt.

Ferner ist bevorzugt vorgesehen, dass die Statorringe, insbesondere die einzelnen Statorsegmente, und/oder die Rotorringe, insbesondere die einzelnen Rotorsegmente, mittels Verbindungselementen, ausgebildet als Schließringbolzensysteme, verbunden sind.

Dabei umfasst das einzelne Schließringbolzensystem einen Bolzen, wobei an einem Ende des Bolzens ein Kopf ausgebildet ist, und wobei am anderen Ende des Bolzens ein Schließring aufgepresst ist, wobei vor Aufpressen des Schließrings der Bolzen in Axialrichtung vorgespannt ist. Die Bolzen erstrecken sich in Axialrichtung des Antriebs und führen durch Verbindungslöcher in den Statorringen bzw. Rotorringen.

Das Schließringbolzensystem ermöglicht ein sehr prozesssicheres Fügen der einzelnen Elemente mit einer hohen axialen Vorspannung. Durch die hohe axiale Vorspannung erfolgt eine vibrationsfeste Verbindung der einzelnen Elemente. Das Schließringbolzensystem weist einen Bolzen auf. An einem Ende des Bolzens ist ein Kopf ausgebildet. An dem anderen Ende des Bolzens wird ein Schließring aufgepresst. Das Aufpressen des Schließrings auf den Bolzen erfolgt insbesondere durch eine Deformation des Schließrings in radialer Richtung. Vor dem Aufpressen des Schließrings wird der Bolzen in Axialrichtung vorgespannt.

Im Gegensatz zu herkömmlichen Nieten hat das Schließringbolzensystem den Vorteil, dass eine große axiale Vorspannung erzeugt werden kann. Gleichzeitig erfolgt beim Schließringbolzensystem keine Lochleibung. Der Bolzen füllt somit die Verbindungslöcher nicht vollständig aus, so dass in einem gewissen Rahmen bei der Montage eine Verschiebung und somit exakte Positionierung der Rotorsegmente oder Statorsegmente in Radialrichtung möglich ist. Im Gegensatz zum herkömmlichen Verschrauben hat das Schließringbolzensystem den Vorteil, dass sehr schnell und sehr prozesssicher immer die gleiche definierte Vorspannung in Axialrichtung auf den Bolzen aufgebracht werden kann.

Vorteilhafterweise werden die Verbindungselemente nicht nur zur Verbindung der Statorringe, sondern auch gleichzeitig zur Anbindung der Statorringe an der Statorscheibe verwendet. Dementsprechend sind auch in der Statorscheibe Verbindungslöcher vorgesehen, durch die die Bolzen ragen. Dadurch ist eine gleichzeitige Fixierung der Statorringe zueinander, als auch eine Fixierung des gesamten Statorblechpaketes auf der Statorscheibe möglich.

Genauso wie bei der Statorscheibe sind auch vorteilhafterweise an der Rotorscheibe Verbindungslöcher vorgesehen, so dass mittels der Verbindungselemente nicht nur die Rotorringe untereinander, sondern auch das gesamte Rotorblechpaket auf der Rotorscheibe fixierbar ist.

Bevorzugt ist vorgesehen, dass die Verbindungslöcher um zumindest 0,05%, vorzugsweise um zumindest 0,1%, größer sind, als der Außendurchmesser des Bolzens. Wie beschrieben, ist der Segmentwinkel des einzelnen Rotorsegmentes oder Statorsegmentes etwas kleiner als 360°/Segmentanzahl. Bei der Montage des Rotors werden die einzelnen Rotorsegmente gestapelt und mithilfe einer speziellen Montagevorrichtung montiert. Dadurch werden die Rotorsegmente exakt positioniert. Bei der Montage des Stators werden die Statorsegmente gestapelt und auch mithilfe einer speziellen Montagevorrichtung montiert. Dadurch erfolgt die exakte Positionierung der Statorsegmente. Für diese speziellen Montagevorrichtungen muss ein gewisses Spiel zwischen den Verbindungslöchern und den Bolzen vorhanden sein.

Vorteilhafterweise wird zumindest an manchen Verbindungsstellen ein Bolzen mit einem Senkkopf verwendet. Das entsprechende Verbindungsloch, in das der Senkkopf eingesetzt wird, wird jedoch nicht angesenkt. Vielmehr wird ein entsprechender Durchmesser für das Verbindungsloch gewählt, der etwas unterhalb des größten Durchmessers des Senkkopfes liegt. Wenn auf den Bolzen die axiale Vorspannung aufgebracht wird, zieht sich somit der Senkkopf in das Verbindungsloch und deformiert sich und/oder das umgebende Material, so dass er bündig anliegt.

Die Verbindungsmethode mit den Schließringbolzen kann nicht nur an den Rotorblechpaketen und Statorblechpaketen verwendet werden, sondern kann auch zum Aufbau der Rotorscheibe oder Statorscheibe verwendet werden. Insbesondere, wenn die Rotorscheibe oder die Statorscheibe aus mehreren Platten zusammengesetzt ist, eignet sich hier die Anwendung des Schließringbolzensystems.

Nachfolgend wird die Erfindung anhand der begleitenden Zeichnungen im Detail erläutert. Dabei zeigen:
- Fig. 1: eine erfindungsgemäße Karusselltür gemäß einem Ausführungsbeispiel,
- Fig. 2: eine Schnittansicht des Antriebs der erfindungsgemäßen Karusselltür,
- Fig. 3: ein Detail zu Fig. 2,
- Fig. 4: den Stator des Antriebs,
- Fig. 5: ein Statorsegment des Antriebs,
- Fig. 6: einen teilweise montierten Stator,
- Fig. 7: den Rotor des Antriebs,
- Fig. 8: ein Rotorsegment,
- Fig. 9: eine Detailansicht des Rotors,
- Fig. 10: einen teilweise montierten Rotor,
- Fig. 11: ein Detail des Stators,
- Fig. 12: eine Spulenkette des Stators,
- Fig. 13: einen Spulenkörper für die Spulen des Stators,
- Fig. 14: ein Detail des Antriebs gemäß einer ersten Variante,
- Fig. 15: ein Detail des Antriebs gemäß einer zweiten Variante, und
- Fig. 16: ein Detail des Antriebs mit Anschlusssteckern.

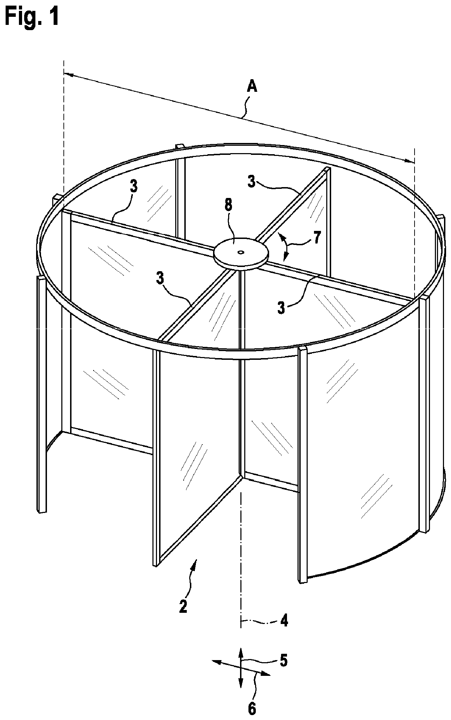

Im Folgenden wird anhand der Fig. 1 bis 16 ein Ausführungsbeispiel einer erfindungsgemäßen Karusselltür 1 gemäß vorliegender Erfindung erläutert.

Fig. 1 zeigt eine isometrische Ansicht der Karusselltür 1. Die Karusselltür 1 umfasst ein Drehkreuz 2. Dieses Drehkreuz 2 weist vier Türflügel 3 auf. Die Türflügel 3 sind jeweils um 90° zueinander abgewinkelt. Das Drehkreuz 2 ist um eine Drehachse 4 drehbar angeordnet. Die Drehachse 4 streckt sich in Axialrichtung 5. Senkrecht zur Axialrichtung 5 ist eine Radialrichtung 6 definiert. Um die Axialrichtung 5 ist eine Umfangsrichtung 7 definiert.

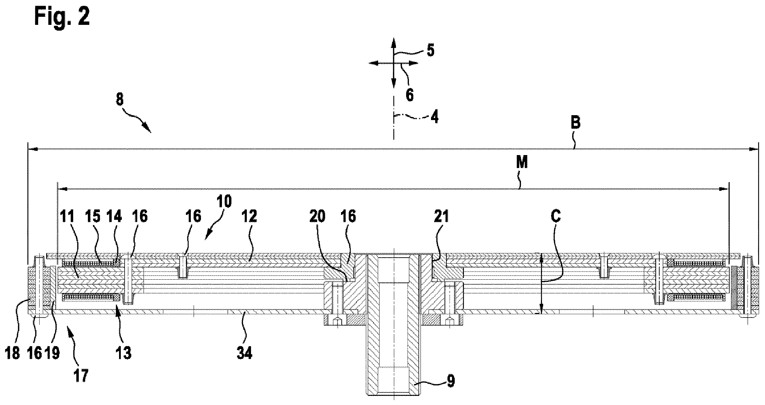

Auf dem Drehkreuz 2 ist ein Antrieb 8 angeordnet. Dieser Antrieb 8 ist als elektronisch kommutierter Vielpolmotor ausgebildet. Der Rotor 17 (s. Fig. 2 ff.) dieses Antriebs 8 ist koaxial zur Drehachse 4 mit dem Drehkreuz 2 verbunden. Dadurch ermöglicht der Antrieb 8 einen direkten und getriebelosen Antrieb des Drehkreuzes 2.

Gemäß Fig. 1 weist das Drehkreuz 2 mit seinen Türflügeln 3 einen größten Drehkreuzdurchmesser A auf. Der Durchmesser A ist in Radialrichtung 6, also senkrecht zur Axialrichtung 5, definiert.

Fig. 2 zeigt einen Schnitt durch den Antrieb 8. Der Antrieb 8 umfasst einen Stator 10 und den Rotor 17. Wie Fig. 1 zeigt, ist der Antrieb 8 über dem Drehkreuz 2 angeordnet. Dabei befindet sich der Rotor 17 zwischen dem Drehkreuz 2 und dem Stator 10. Entgegen der gezeigten Ausführungsform kann der Antrieb 8 auch unter dem Drehkreuz 2 angeordnet werden, wobei dann ebenfalls der Rotor 17 zwischen Stator 10 und Drehkreuz 2 angeordnet wird.

Fig. 2 zeigt ein drehfest mit dem Rotor 17 verbundenes Abtriebselement 9. Über dieses Abtriebselement 9 ist das Drehkreuz 2 drehfest mit dem Rotor 17 verbunden. Dieses Abtriebselement 9 dient insbesondere zur drehfesten Verbindung von herkömmlichen Drehkreuzen 2 mit dem erfindungsgemäßen Antrieb 8. Bei einer speziellen Konstruktion des Drehkreuzes 2 für den gezeigten Antrieb 8, kann das Drehkreuz 2, insbesondere die einzelnen Türflügel 3, auch direkt mit dem Rotor 17, ohne separatem Abtriebselement 9 verbunden werden.

Der Stator 10 umfasst eine Statorscheibe 12. Am äußeren Umfang der Statorscheibe 12 ist ein Statorblechpaket 11 angeordnet. Auf diesem Statorblechpaket 11 stecken die einzelnen Spulen 13 des Stators 10.

Jede Spule umfasst einen Spulenkörper 14, beispielsweise aus Kunststoff. Auf diesem Spulenkörper 14 befinden sich die Wicklungen 15 der einzelnen Spule 13.

Über Verbindungselemente 16, hier ausgebildet als Schließringbolzensysteme, ist das Statorblechpaket 11 mit der Statorscheibe 12 verbunden.

Der Rotor 17 umfasst eine Rotorscheibe 34. Diese Rotorscheibe 34 liegt der Statorscheibe 12 gegenüber. Zwischen den beiden Scheiben 34, 12 ist das Statorblechpaket mit den Spulen 13 angeordnet.

Am äußeren Umfang der Rotorscheibe 34 ist ein Rotorblechpaket 18 angeordnet. Dieses Rotorblechpaket 18 ist über Verbindungselemente 16 in Form von Schließringbolzensystemen mit der Rotorscheibe 34 verbunden.

Radial innerhalb des Rotorblechpaketes 18 sind auf dem Rotorblechpaket 18 mehrere Permanentmagneten 19 angeordnet.

Im Bereich der Drehachse 4 sind zwischen der Statorscheibe 12 und der Rotorscheibe 34 ein Axiallager 20 und ein Radiallager 21 ausgebildet. Im gezeigten Ausführungsbeispiel sind das Axiallager 20 und das Radiallager 21 als Gleitlager ausgebildet.

Ferner zeigt Fig. 2 einen größten Rotordurchmesser B senkrecht zur Axialrichtung 5 sowie einen größten Statordurchmesser M, ebenfalls senkrecht zur Axialrichtung 5. Der Statordurchmesser M ist dabei bis zu den äußeren Enden des Statorblechpaketes 11 definiert.

Fig. 2 zeigt für den Antrieb 8, dass aufgrund der Verwendung des Statorblechpaketes 11 und des Rotorblechpaketes 18 eine sehr hohe Leistungsdichte für den Antrieb 8 möglich ist. Dadurch kann der Antrieb relativ klein konstruiert werden. Dies bezieht sich sowohl auf den Rotordurchmesser B als auch auf eine Antriebshöhe C, welche in Axialrichtung 5 definiert ist.

Wie in Zusammenschau mit Fig. 1 zu erkennen ist, ermöglicht der Antrieb 8 mit relativ kleinem Rotordurchmesser B größtmögliche Gestaltungsfreiheit für die Deckenkonstruktion über der Karusselltür 1. Der Großteil des Deckenbereiches über der Karusselltür 1 kann absolut frei, beispielsweise transparent mit Glasscheiben gestaltet werden. Lediglich eine kleine Fläche ist hier durch den Antrieb 8 bedeckt.

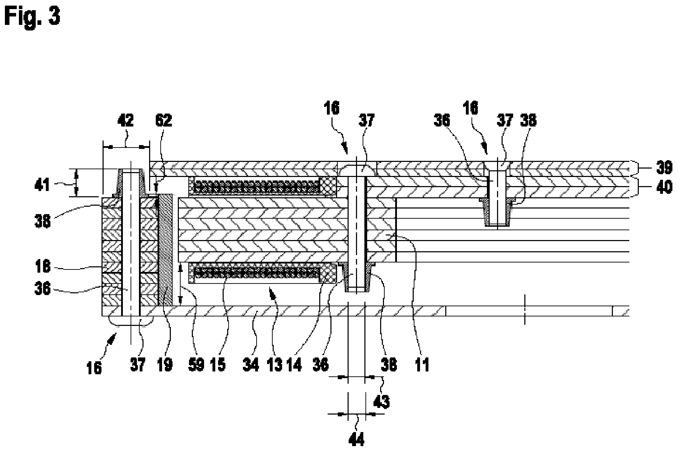

Fig. 3 zeigt einen Detailausschnitt zu Fig. 1. In dieser Darstellung ist die genaue Ausgestaltung der Verbindungselemente 16 als Schließringbolzensystem zu sehen.

Für die Verbindungselemente 16 werden Bolzen 36 verwendet. Die Bolzen 36 weisen Köpfe 37 auf. Die Köpfe 37 sind entweder linsenförmig oder als Senkköpfe ausgebildet. An den den Köpfen 37 gegenüberliegenden Enden der Bolzen 36 werden Schließringe 38 aufgepresst. Bevor diese Schließringe 38 aufgepresst werden, werden die Bolzen 36 in Axialrichtung 5 vorgespannt.

Wie Fig. 3 zeigt, ist die Statorscheibe 12 aus einzelnen Scheibenblechen 39, 40 zusammengesetzt. Die Verbindungselemente 16 werden nicht nur zur Verbindung der Blechpakete (Statorblechpaket 11 und Rotorblechpaket 18) untereinander, sondern auch zur Verbindung der Blechpakete mit der Statorscheibe 12 bzw. der Rotorscheibe 34 verwendet, als auch zur Verbindung der einzelnen Scheibenbleche 39, 40.

Fig. 3 zeigt ferner einen Bolzendurchmesser 43 der Bolzen 36 sowie einen Verbindungslochdurchmesser 44 der Verbindungslöcher 27, in denen die Bolzen 36 stecken. Der Verbindungslochdurchmesser 44 ist etwas größer gewählt als der Bolzendurchmesser 43. Es ist zu beachten, dass das Schließringbolzensystem den Vorteil hat, dass die Bolzen 36 in Axialrichtung vorgespannt werden und die Verbindungslöcher 27 nicht ausfüllen. Es verbleibt also bei der Montage ein gewisses Spiel zum Verschieben der einzelnen Bleche untereinander.

Fig. 3 zeigt ferner einen begrenzten axialen Bauraum 41 und einen radialen Bauraum 42 der hier für die Schließringe 38 zur Verfügung steht. Die Permanentmagneten 19 ragen mit einem ersten Überstand 59 weiter in Axialrichtung 5 als das Statorblechpaket 11. Auf der gegenüberliegenden Seite stehen die Permanentmagneten 19 mit einem zweiten Überstand 62 über das Rotorblechpaket 18 über.

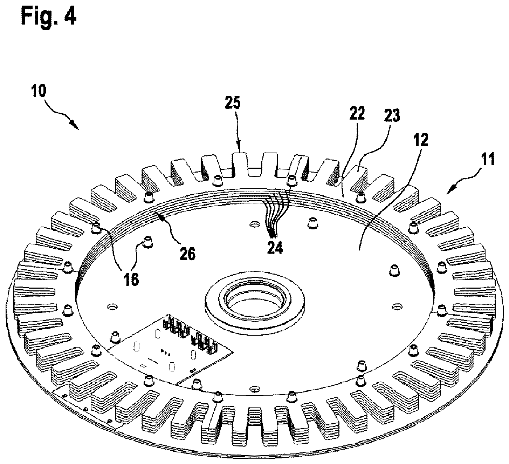

Fig. 4 zeigt den Stator 10 ohne den aufgesteckten Spulen 13. Gemäß Fig. 4 umfasst das Statorblechpaket 11 einen geschlossenen Ring 22, von dem in Radialrichtung 6 nach außen mehrere Zähne 23 abstehen. Auf diese Zähne 23 werden die Spulenkörper 14 aufgesteckt.

Das Statorblechpaket 11 ist zusammengesetzt aus mehreren, übereinandergestapelten Statorringen 24. Der einzelne Statorring 24 wiederum ist zusammengesetzt aus beispielsweise vier Statorsegmenten 25.

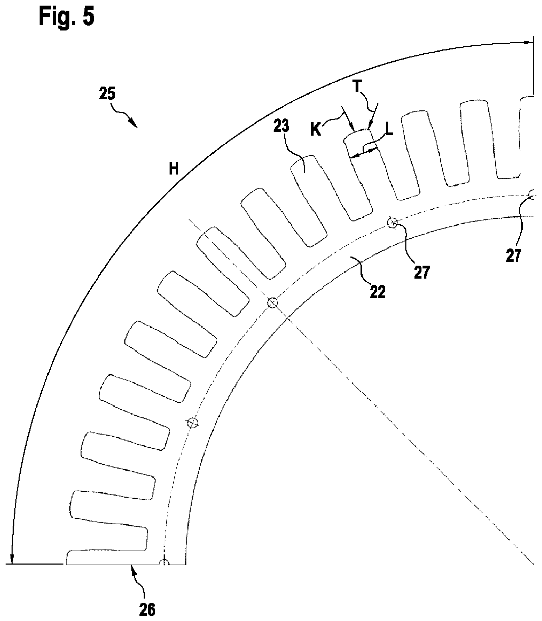

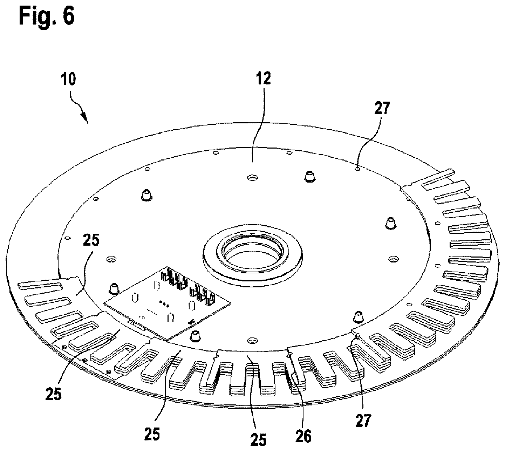

Fig. 5 zeigt im Detail eines der Statorsegmente 25. Fig. 6 zeigt, wie die einzelnen Statorsegmente 25 versetzt zueinander angeordnet werden. Jeweils zwischen zwei Statorsegmenten 25 entsteht ein Stoß 26. In den Statorsegmenten 25 sind Verbindungslöcher 27 vorgesehen. Durch diese Verbindungslöcher 27 werden die Bolzen 36 der Verbindungselemente 16 gesteckt.

Fig. 5 zeigt den Segmentwinkel H, den Kopfradius K des einzelnen Zahns 23, den Eckenradius T des einzelnen Zahns 23 sowie die Zahnbreite L des einzelnen Zahns 23.

Der Kopfradius K und der Eckenradius T werden entsprechend ausgebildet, um möglichst wenig Rastmoment zu erzeugen. Die Zahnbreite L ist in der Mitte des Zahns 23 etwas vergrößert. Dadurch klemmen die aufgesteckten Spulenkörper 14 auf den Zähnen 23.

Wie insbesondere Fig. 6 zeigt, liegen die Stöße 26 in der Mitte des einzelnen Zahns 23. Des Weiteren werden die Statorsegmente 25 versetzt zueinander angeordnet, so dass die Stöße 26 der einzelnen Statorringe 24 sich nicht überlappen. Dies hat entsprechend positive Auswirkungen auf den magnetischen Fluss im Statorblechpaket 11.

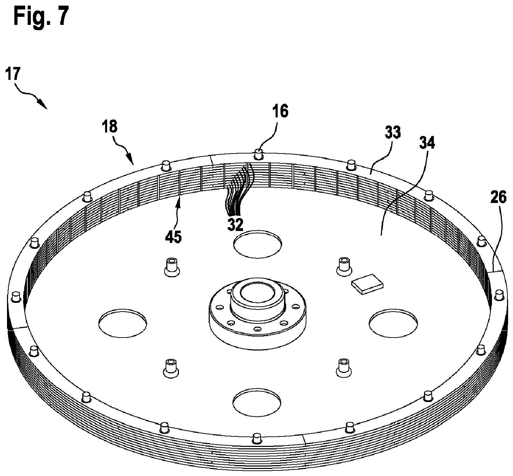

Fig. 7 zeigt im Detail den Rotor 17 ohne den Permanentmagneten 19. Das Rotorblechpaket 18 ist, ähnlich wie das Statorblechpaket 11, zusammengesetzt aus übereinandergestapelten Rotorringen 32. Die einzelnen Rotorringe 32 wiederum sind aus Rotorsegmenten 33 zusammengesetzt. Zwischen den Rotorsegmenten 33 entstehen Stöße 26. In den Rotorsegmenten 33 sind entsprechende Verbindungslöcher 27 vorgesehen. Durch diese Verbindungslöcher 27 werden die Bolzen 36 (s. Fig. 3) gesteckt.

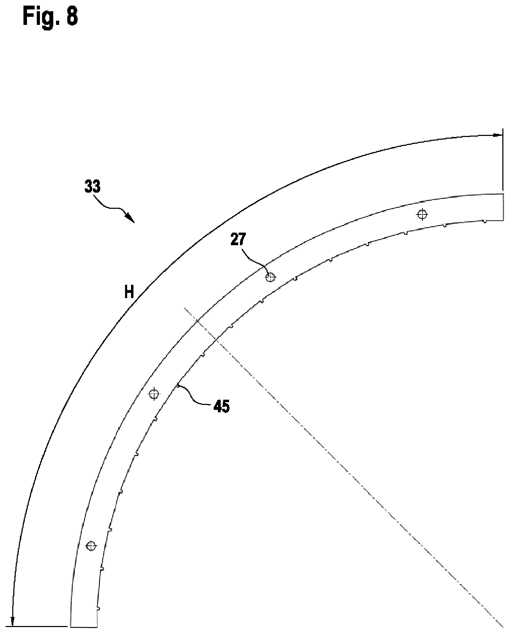

Fig. 8 zeigt im Detail ein einzelnes Rotorsegment 33 mit dessen Segmentwinkel H.

Radial innen an den Rotorsegmenten 33 sind Positionierungsfortsätze 45 ausgebildet. Diese Positionierungsfortsätze 45 sind hier kleine, radial nach innen ragende Nasen.

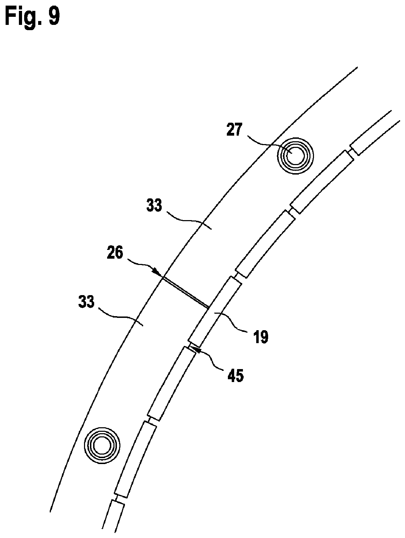

Wie insbesondere die Zusammenschau von Fig. 9 und Fig. 7 zeigt, bilden diese Positionierungsfortsätze 45 im zusammengesetzten Zustand des Rotorblechpaketes 18 kleine Stege zwischen den einzelnen Permanentmagneten 19. Die Positionierungsfortsätze 45 sorgen für den definierten Abstand der einzelnen Permanentmagneten 19 zueinander.

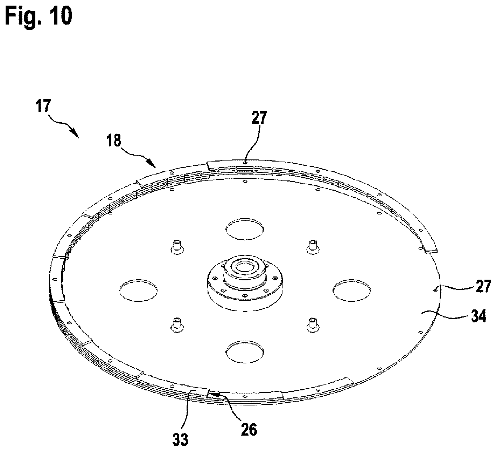

Fig. 10 zeigt einen teilmontierten Zustand des Rotorblechpaketes 18. Ähnlich wie bei dem Statorblechpaket 11 werden auch hier die einzelnen Rotorsegmente 33 versetzt zueinander angeordnet, so dass die Stöße 26 einzelner Rotorringe 32 nicht überlappen. Dies wirkt sich positiv auf den magnetischen Fluss aus.

Der Segmentwinkel H der Statorsegmente 25 und der Rotorsegmente 33 ist geringfügig kleiner als 360°/Segmentanzahl. Die einzelnen Segmente 25, 33 werden in Position gebracht und über die Verbindungselemente 16 fixiert. Dabei ist der Bolzendurchmesser 43 kleiner als der Verbindungslochdurchmesser 44 (s. Fig. 3). Dadurch ist ein gewisses Spiel bei der Montage möglich.

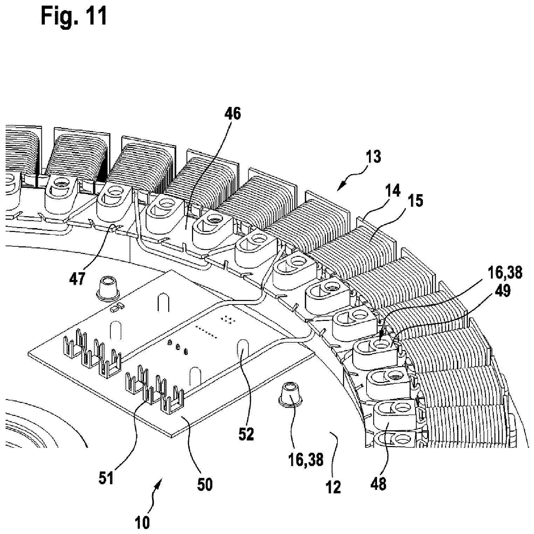

Fig. 11 zeigt ein Detail des Stators 10. Anhand dieser Darstellung ist gut zu erkennen, dass radial innerhalb der einzelnen Spulen 13 sogenannte Drahtführungselemente 46, insbesondere aus Kunststoff, aufgesetzt sind. Diese Drahtführungselemente 46 führen die Drähte zwischen den einzelnen Spulen 13. Hierzu weisen die Drahtführungselemente 46 Schlitze 47 auf, in die die Drähte eingesteckt werden können.

Auf der Statorscheibe 12, in dem Hohlraum zwischen der Statorscheibe 12 und der Rotorscheibe 34, befindet sich eine Leiterplatte 50. Auf dieser Leiterplatte 50 sind Schneidklemmen 51 angeordnet. In diese Schneidklemmen 51 können die Drähte eingesteckt werden. Dabei erfolgt durch die Funktion der Schneidklemmen 51 gleichzeitig ein Abisolieren der Drähte als auch ein Kontaktieren der Drähte. Über Rastverbindungen 52 ist die Leiterplatte 50 mit der Statorscheibe 12 verbunden.

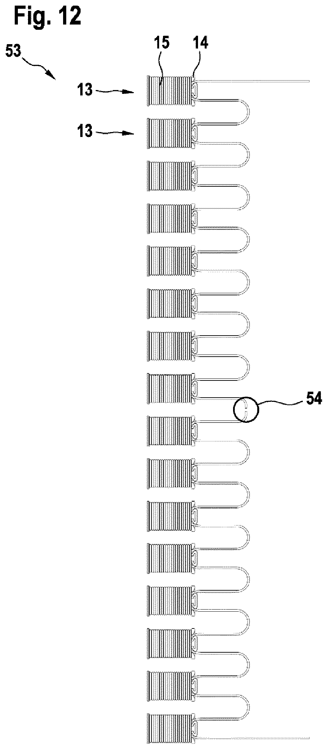

Für eine einfache Herstellung und Montage werden Spulenketten 53 gemäß Fig. 12 verwendet. Die einzelne Spulenkette 53 weist mehrere Spulenkörper 14 auf. Der Draht wird jeweils um einen Spulenkörper 14 gewickelt und führt zum nächsten Spulenkörper 14 und wird wiederum zu einer Spule 13 gewickelt. Dadurch entstehen mehrere zusammenhängende Spulen 13 inkl. Spulenkörper 14. Diese Spulenketten 43 können sehr einfach auf das Statorblechpaket 11 montiert werden. Über gelötete Verbindungstellen 54 können die Drähte zu mehreren Ketten verbunden werden.

Nach dem Aufstecken der Spulenketten 53 werden die Drähte zwischen den Spulen 13 in die entsprechenden Schlitze 47 der Drahtführungselemente 46 eingesteckt.

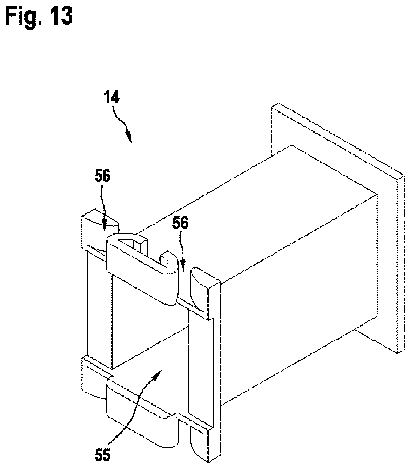

Fig. 13 zeigt im Detail einen der Spulenkörper 14. Im Spulenkörper 14 sind durch entsprechend abgerundete Schlitze Drahtein-/-ausläufe 56 vorgesehen, um den Draht definiert in den gewickelten Zustand überzuführen. Im Inneren der Spulenkörper 14 ist ein entsprechender Hohlraum 55 vorgesehen. In diesen Hohlraum 55 ragt im montierten Zustand ein Zahn 23.

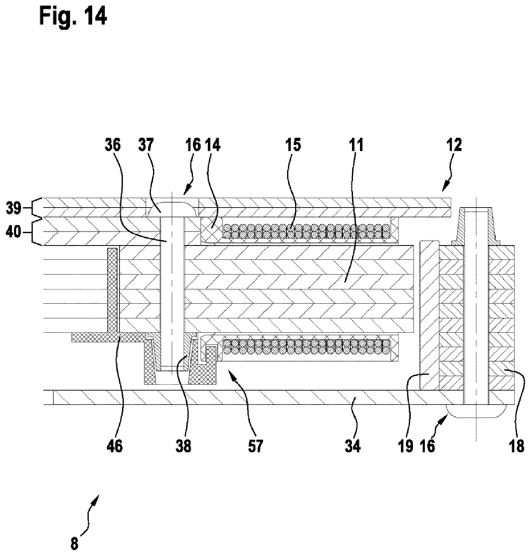

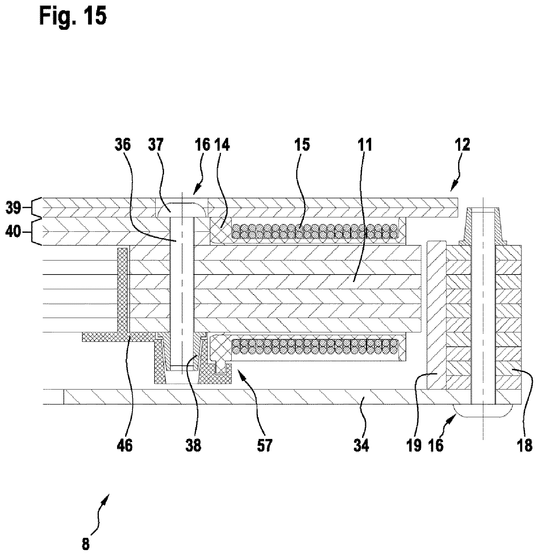

Fig. 14 und 15 zeigen in Schnittansichten zwei mögliche Varianten für die genaue Ausbildung der Drahtführungselemente 46. In beiden Varianten gibt es eine direkte formschlüssige Verbindung 57 zwischen dem Drahtführungselement 46 und dem Spulenkörper 14. Gemäß Fig. 14 ragt ein Fortsatz des Drahtführungselementes 46 in eine entsprechende Nut des Spulenkörpers 14. Gemäß Fig. 15 ragt ein entsprechender Fortsatz des Spulenkörpers 14 in eine Nut des Drahtführungselementes 46.

In beiden Varianten ist eine einfache und schnelle Montage sowie eine gegenseitige Fixierung der Drahtführungselemente 46 und der Spulenkörper 14 möglich.

Ferner zeigen Fig. 14 und 15 eines der Verbindungselemente 16, welches zur Montage des Statorblechpaketes 11 genutzt wird. Diese Verbindungselemente 16 weisen, wie bereits beschrieben, entsprechende Schließringe 38 auf. Diese Schließringe 38 werden hier zur Positionierung und/oder Fixierung der Drahtführungselemente 46 verwendet. Dies erfolgt, indem die Drahtführungselemente 46 auf diese Schließringe 38 aufgesteckt werden.

Ferner zeigt die Zusammenschau auf Fig. 11 mit Fig. 14 und Fig. 15, dass die Drahtführungselemente 46 Dome 48 aufweisen. Diese Dome 48 sind integrale Fortsätze der Drahtführungselemente 46, die sich in Axialrichtung 5 in Richtung der Rotorscheibe 34 erstrecken.

Wie anhand von Fig. 2 gezeigt wurde, befindet sich die axiale und radiale Lagerung zwischen Rotor 17 und Stator 10 relativ weit in der Mitte. Dadurch könnte es zu einem Verkippen des Rotors 17 gegenüber dem Stator 10 kommen. Um dieses Verkippen zu begrenzen, sind die Dome 48 vorgesehen. Die Rotorscheibe 34 kann an diesen Domen 48 bei einem entsprechenden Verkippen aufliegen.

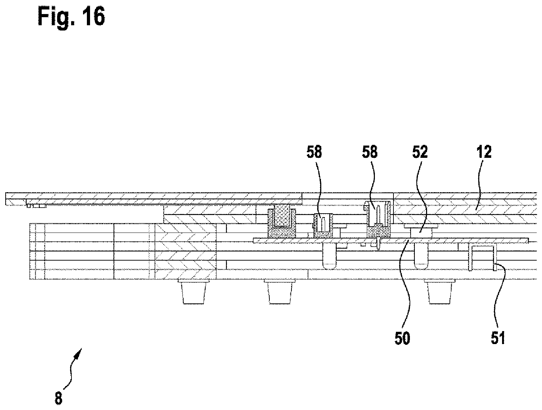

Fig. 16 zeigt im Detail eine Schnittansicht des Antriebs 8. Dieser Schnitt führt durch die in Fig. 11 gezeigte Leiterplatte 50. An der Leiterplatte 50 sind Anschlussstecker 58 ausgebildet. Diese ragen nach oben, also in Richtung der Statorscheibe 12. In der Statorscheibe 12 ist eine entsprechende Aussparung vorgesehen, so dass die Anschlussstecker 58 von oben zugänglich sind. Dabei zeigt Fig. 16 auch, dass die Anschlussstecker 58 nicht über die Statorscheibe 12 hinausragen und somit während des Transports geschützt angeordnet sind. Die beiden Anschlussstecker 58 dienen zur strom- und datenführenden Anbindung des Antriebs 8.

### Bezugszeichenliste

- A: Drehkreuzdurchmesser
- B: Rotordurchmesser
- C: Antriebshöhe
- D: Karusselltürrastzahl
- E: Auslegungskoeffizienten
- F: Spulenanzahl
- G: Statorsegmentanzahl
- H: Segmentwinkel
- I: Reduktionswinkel
- K: Kopfradius
- L: Zahnbreite
- M: Statordurchmesser
- N: Rotorsegmentanzahl
- T: Eckenradius
- U: Magnetanzahl

- 1: Karusselltür
- 2: Drehkreuz
- 3: Türflügel
- 4: Drehachse
- 5: Axialrichtung
- 6: Radialrichtung
- 7: Umfangsrichtung
- 8: Antrieb
- 9: Abtriebselement
- 10: Stator
- 11: Statorblechpaket
- 12: Statorscheibe
- 13: Spulen
- 14: Spulenkörper
- 15: Wicklung
- 16: Verbindungselemente (Schließringbolzensystem)
- 17: Rotor
- 18: Rotorblechpaket
- 19: Permanentmagneten
- 20: Axiallager
- 21: Radiallager
- 22: geschlossener Ring
- 23: Zähne
- 24: Statorring
- 25: Statorsegmente
- 26: Stöße
- 27: Verbindungslöcher
- 32: Rotorringe
- 33: Rotorsegmente
- 34: Rotorscheibe
- 36: Bolzen
- 37: Köpfe
- 38: Schließringe
- 39: erste Scheibenbleche
- 40: zweite Scheibenbleche
- 41: axialer Bauraum
- 42: radialer Bauraum
- 43: Bolzendurchmesser
- 44: Verbindungslochdurchmesser
- 45: Positionierungsfortsätze
- 46: Drahtführungselemente
- 47: Schlitze
- 48: Dome
- 49: Anlaufflächen
- 50: Leiterplatte
- 51: Schneidklemmen
- 52: Rastverbindung
- 53: Spulenkette
- 54: Verbindungstelle (Lötstelle)
- 55: Hohlraum
- 56: Drahtein-/-auslauf
- 57: direkte formschlüssige Verbindung
- 58: Anschlussstecker
- 59: erster Überstand
- 62: zweiter Überstand

## Patentansprüche

1. Karusselltür (1) umfassend
• ein Drehkreuz (2) mit zumindest zwei Türflügeln (3), wobei das Drehkreuz (2) um eine Drehachse (5) drehbar ist, wobei entlang der Drehachse (5) eine Axialrichtung (5) und senkrecht zur Axialrichtung (5) eine Radialrichtung (6) definiert sind, und
• einen elektrischen Antrieb (8), ausgebildet als elektronisch kommutierter Vielpolmotor mit einem Stator (10) umfassend ein Statorblechpaket (11) und mehrere Spulen (13), und einem Rotor (17), umfassend ein Rotorblechpaket (18) und mehrere Permanentmagneten (19),
• wobei der Rotor (17) koaxial zur Drehachse angeordnet ist, und mit dem Drehkreuz (2) zum direkten, getriebelosen Antrieb verbunden ist,
**gekennzeichnet durch** einen für die Auslegung der Karusselltür angewandten Auslegungskoeffizienten (E), wobei gilt A/B=E*F/U, mit Drehkreuzdurchmesser (A), Rotordurchmesser (B), Spulenanzahl (F) und Magnetanzahl (U), wobei
• der Auslegungskoeffizient (E) zumindest 3 und vorzugsweise zumindest 4, beträgt, und
• der Auslegungskoeffizient (E) höchstens 13 und vorzugsweise höchstens 11, beträgt, und wobei
• das Verhältnis (F/A) zumindest 10 Stück/m, und vorzugsweise zumindest 12 Stück/m, beträgt, und
• wobei das Verhältnis (F/A) höchstens 35 Stück/m und vorzugsweise höchstens 30 Stück/m, beträgt.

2. Karusselltür nach Anspruch 1, **gekennzeichnet durch** eine Karusselltürrastzahl (D), definiert als Verhältnis aus maximaler kinetischer Energie des Drehkreuzes (2) zum Rastmoment des Antriebs (8) bei einer Umfangsgeschwindigkeit des Drehkreuzes (2) von 0,25 m/s, wobei die Karusselltürrastzahl zumindest 0,01, vorzugsweise zumindest 0,02, besonders vorzugsweise zumindest 0,03, beträgt.

3. Karusselltür nach einem der vorhergehenden Ansprüche, **gekennzeichnet durch** ein Verhältnis (B/A) des Rotordurchmessers (B) zum Drehkreuzdurchmesser (A),
• wobei das Verhältnis (B/A) zumindest 1/15, vorzugsweise zumindest 1/10, besonders vorzugsweise zumindest 1/8, beträgt, und
• wobei das Verhältnis (B/A) höchstens 1/2, vorzugsweise höchsten 1/3, besonders vorzugsweise höchstens 1/4, beträgt.

4. Karusselltür nach einem der vorhergehenden Ansprüche, **dadurch gekennzeichnet,**
• **dass** das Statorblechpaket (11) einen geschlossenen Ring (22) und radiale Zähne (23) zum Aufstecken der Spulen (13) umfasst, wobei das Statorblechpaket (11) aus mehreren gestapelten Statorringen zusammengesetzt ist, und wobei der einzelne Statorring aus mehreren in Umfangsrichtung nebeneinander angeordneten Statorsegmenten (25) zusammengesetzt ist, und/oder
• **dass** das Rotorblechpaket (18) mehrere gestapelte Rotorringe umfasst, wobei der einzelne Rotorring aus mehreren in Umfangsrichtung nebeneinander angeordneten Rotorsegmenten (33) zusammengesetzt ist, und wobei an der radialen Innenseite des Rotorblechpaketes (18) die Permanentmagneten (19) angeordnet sind.

5. Karusselltür nach Anspruch 4, **dadurch gekennzeichnet,**
• **dass** die Statorsegmente (25) versetzt zueinander angeordnet sind, sodass die Stöße (26) jeweils zwischen zwei Statorsegmenten (25) in einem Statorring nicht mit den Stößen (26) des benachbarten Statorrings überlappen, wobei vorzugsweise die Teilung der Statorringe so gewählt ist, dass die Stöße (26) zwischen den Statorsegmenten (25) in den Zähnen (23) liegen, und/oder
• **dass** die Rotorsegmente (33) versetzt zueinander angeordnet sind, sodass die Stöße (26) zwischen zwei Rotorsegmenten (33) in einem Rotorring nicht mit den Stößen (26) des benachbarten Rotorrings überlappen.

6. Karusselltür nach einem der Ansprüche 4 oder 5, **dadurch gekennzeichnet,**
• **dass** jedes Statorsegment (25), zumindest im unmontierten Zustand, einen Segmentwinkel (H) aufweist, wobei gilt H=(360°/C)-I, mit Statorsegmentanzahl (G) und Reduktionswinkel (I), und/oder
• **dass** jedes Rotorsegment (33), zumindest im unmontierten Zustand, einen Segmentwinkel (H) aufweist, wobei gilt H=(360°/N)-I, mit Rotorsegmentanzahl (N) und Reduktionswinkel (I),
• wobei der Reduktionswinkel (I) zwischen 0,05° und 1°, vorzugsweise zwischen 0,1° und 0,8°, liegt.

7. Karusselltür nach einem der Ansprüche 4 oder 5, **dadurch gekennzeichnet,**
• **dass** die Statorsegmente (25) mehrerer Statorringe die gleiche Blechstärke und/oder die gleiche Geometrie und/oder den gleichen Segmentwinkel (H) aufweisen, wobei die Statorsegmente (25) vorzugsweise spiegelsymmetrisch sind, und/oder
• **dass** die Rotorsegmente (33) mehrerer Rotorringe die gleiche Blechstärke und/oder die gleiche Geometrie und/oder den gleichen Segmentwinkel (H) aufweisen, wobei die Rotorsegmente (33) vorzugsweise spiegelsymmetrisch sind.

8. Karusselltür nach einem der Ansprüche 4 bis 7, **dadurch gekennzeichnet,**
• **dass** die Köpfe der Zähne (23) mit einem Kopfradius (K) verrundet sind, wobei der Kopfradius (K) in einer zur Drehachse (4) senkrechten Eben liegt, wobei der Kopfradius (K) zumindest 30mm, vorzugsweise zumindest 40mm, beträgt,
• und/oder dass die Ecken der Köpfe der Zähne (23) mit einem Eckenradius (T) verrundet sind, wobei der Eckenradius (T) in einer zur Drehachse (4) senkrechten Eben liegt,
∘ wobei der Eckenradius (T) zumindest 0,5mm , vorzugsweise zumindest 1mm, besonders vorzugsweise zumindest 1,5mm, beträgt, und/oder
∘ wobei der Eckenradius (T) höchstens 5mm, vorzugsweise höchstens 4mm, besonders vorzugsweise höchstens 3,5mm, beträgt,
• und/oder dass die Zähne (23) am Kopf eine Zahnbreite (L) aufweisen, wobei die Zahnbreite (L) in Umfangsrichtung (7) definiert ist,
∘ wobei die Zahnbreite (L) zumindest 8mm, vorzugsweise zumindest 10mm, besonders vorzugsweise zumindest 12mm, beträgt, und/oder
∘ wobei die Zahnbreite (L) höchstens 20mm, vorzugsweise höchstens 18mm, besonders vorzugsweise höchstens 16mm, beträgt.

9. Karusselltür nach einem der vorhergehenden Ansprüche, **dadurch gekennzeichnet, dass**
• die Statorringe, insbesondere die einzelnen Statorsegmente (25), und/oder die Rotorringe, insbesondere die einzelnen Rotorsegmente (33), mittels Verbindungselementen (16), ausgebildet als Schließringbolzensysteme, verbunden sind,
• wobei das einzelne Schließringbolzensystem einen Bolzen (36) umfasst, wobei an einem Ende des Bolzens (36) ein Kopf (37) ausgebildet ist, und wobei am anderen Ende des Bolzens (36) ein Schließring (38) aufgepresst ist, wobei vor Aufpressen des Schließrings (38) der Bolzen (36) in Axialrichtung (5) vorgespannt ist, und
• wobei sich die Bolzen (36) in Axialrichtung (5) erstrecken und durch Verbindungslöcher in den Statorringen bzw. Rotorringen führen.

## Claims

1. A revolving door (1), comprising
• a turnstile (2) with at least two door leaves (3), wherein the turnstile (2) is rotatable about an axis of rotation (4), wherein are defined an axial direction (5) along the axis of rotation (4) and, vertically to the axial direction (5), a radial direction (6), and
• an electric drive (8), formed as an electronically commutated multi-pole motor with a stator (10), comprising a laminated stator core (11) and several coils (13), and a rotor (17) comprising a laminated rotor core (18) and several permanent magnets (19),
• wherein the rotor (17) is disposed coaxially to the axis of rotation, and is connected to the turnstile (2) for direct gearless drive,
**characterized by** a specification coefficient (E) applied for specifying the revolving door, wherein shall apply A/B=E*F/U, with turnstile diameter (A), rotor diameter (B), number of coils (F) and number of magnets (U), wherein
• the specification coefficient (E) is at least 3 and preferably at least 4, and
• the specification coefficient (E) is at most 13 and preferably at most 11, and wherein
• the ratio (F/A) is at least 10 pieces/m, and preferably at least 12 pieces/m, and
• wherein the ratio (F/A) is at most 35 pieces/m, and preferably at most 30 pieces/m.

2. The revolving door of claim 1, **characterized by** a revolving door detent number (D), defined as the ratio of maximum kinetic energy of the turnstile (2) to detent torque of the drive (8) at a peripheral speed of the turnstile (2) of 0.25 m/s, wherein the revolving door detent number is at least 0.01, preferably at least 0.02, particularly preferred at least 0.03.

3. The revolving door according to any of the preceding claims, **characterized by** a ratio (B/A) of the rotor diameter (B) to the turnstile diameter (A),
• wherein the ratio (B/A) is at least 1/15, preferably at least 1/10, particularly preferred at least 1/8, and
• wherein the ratio (B/A) is at most 1/2, preferably at most 1/3, particularly preferred at most 1/4.

4. The revolving door according to any of the preceding claims, **characterized in**
• **that** the laminated stator core (11) comprises a closed ring (22) and radial teeth (23) for placing the coils (13) thereon, wherein the laminated stator core (11) is composed of several stacked stator rings, and wherein the individual stator ring is composed of several stator segments (25) disposed next to each other in circumferential direction,
• **that** the laminated rotor core (18) comprises several stacked rotor rings, wherein the individual rotor rings are composed of several rotor segments (33) disposed next to each other in circumferential direction, and wherein the permanent magnets (19) are disposed at the radial inner side of the laminated rotor core (18).

5. The revolving door of claim 4, **characterized in**
• **that** the stator segments (25) are disposed offset to each other so that the butts (26) respectively between two stator segments (25) in a stator ring do not overlap with the butts (26) of the neighbouring stator ring, wherein preferably the pitch of the stator rings is selected such that the butts (26) are located between the stator segments (25) in the teeth (23), and/or
• **that** the rotor segments (33) are disposed offset to each other so that the butts (26) between two rotor segments (33) in a rotor ring do not overlap with the butts (26) of the neighbouring rotor ring.

6. The revolving door of any of the claims 4 or 5, **characterized in**
• **that** each stator segment (25), at least in the non-mounted condition, has a segment angle (H), wherein applies H=(360°/G)-I, with stator segment number (G) and reduction angle (I), and/or
• **that** each rotor segment (33), at least in the non-mounted condition, has a segment angle (H), wherein applies H=(360°/N)-I, with rotor segment number (N) and reduction angle (I),
• wherein the reduction angle (I) is between 0.05° and 1°, preferably between 0.1° and 0.8°.

7. The revolving door of any of the claims 4 or 5, **characterized in**
• **that** the stator segments (25) of several stator rings have the same sheet thickness and/or the same geometry and/or the same segment angle (H), wherein preferably the stator segments (25) are mirror-symmetric, and/or
• **that** the rotor segments (33) of several rotor rings have the same sheet thickness and/or the same geometry and/or the same segment angle (H), wherein preferably the rotor segments (33) are mirror-symmetric.

8. The revolving door of any of the claims 4 or 7, **characterized in**
• **that** the heads of the teeth (23) are rounded with the head radius (K), wherein the head radius (K) is located in a plane vertical to the axis of rotation (4), wherein the head radius (K) is at least 30 mm, preferably at least 40 mm,
• and/or in that the corners of the heads of the teeth (23) are rounded with a corner radius (T), wherein the corner radius (T) is located in a plane vertical to the axis of rotation (4),
∘ wherein the corner radius (T) is at least 0.5 mm, preferably at least 1 mm, particularly preferred at least 1.5 mm, and/or
∘ wherein the corner radius (T) is at most 5 mm, preferably at most 4 mm, particularly preferred at most 3.5 mm,
• and/or in that the teeth (23) have a tooth width (L) at the head, wherein the tooth width (L) is defined in circumferential direction (7),
∘ wherein the tooth width (L) is at least 8 mm, preferably at least 10 mm, particularly preferred at least 12 mm, and/or
∘ wherein the tooth width (L) is at most 20 mm, preferably at most 18 mm, particularly preferred at most 16 mm.

9. The revolving door of any of the preceding claims, **characterized in that**
• the stator rings, in particular the individual stator segments (25), and/or the rotor rings, in particular the individual rotor segments (33) are connected by means of connecting elements (16) formed as compound rivet systems,
• wherein the individual compound rivet system comprises a bolt (36), wherein a head (37) is formed at one end of the bolt (36), and wherein at the other end of the bolt (36) a retaining ring (38) is pressed on, wherein prior to pressing-on the retaining ring (38), the bolt (36) is pre-tensioned in axial direction (5), and
• wherein the bolts (36) extend in axial direction (5) and pass through connecting holes in the stator rings or the rotor rings.

## Revendications

1. Porte tambour (1), comportant
• un tourniquet (2) ayant au moins deux vantaux de porte (3), le tourniquet (2) étant rotatif autour d'un axe de rotation (4), dans lequel étant définies le long de l'axe de rotation (4), une direction axiale (5), et verticalement par rapport à la direction axiale (5), une direction radiale (6), et
• un entraînement électrique (8) aménagé comme moteur multipôles à commutation électronique avec un stator (10) comportant un empilage de tôles de stator (1) et plusieurs bobines (13), et un rotor (17) comportant un empilage de tôles de rotor (18) et plusieurs aimants permanents (19),
• le rotor (17) étant agencé coaxialement par rapport à l'axe de rotation et étant connecté au tourniquet (2) pour l'entraînement direct sans engrenages,
**caractérisée par** un coefficient de spécification (E) pour la spécification de la porte tambour, dans lequel A/B = E*F/U, avec diamètre de tourniquet (A), diamètre de rotor (B), nombre de bobines (F) et nombre d'aimants (U),
• le coefficient de spécification (E) étant au moins 3 et de préférence au moins 4, et
• le coefficient de spécification (E) étant au maximum 13 et de préférence au maximum 11, et
• le rapport (F/A) étant au moins 10 pièces/m, et de préférence au moins 12 pièces/m, et
• le rapport (F/A) étant au maximum 35 pièces/m et de préférence au maximum 30 pièces/m.

2. Porte tambour selon la revendication 1, **caractérisée par** un nombre détente de porte tambour (D), défini comme rapport d'énergie cinétique maximale du tourniquet (2) au moment de détente de l'entraînement (8) pour une vitesse circonférentielle du tourniquet (2) de 0,25 m/s, le nombre détente de porte tambour étant au moins de 0,01, de préférence au moins de 0,02, tout particulièrement au moins de 0,03.

3. Porte tambour selon l'une des revendications précédentes, **caractérisée par** un rapport (B/A) du diamètre de rotor (B) au diamètre de tourniquet (A),
• le rapport (B/A) étant au moins 1/15, de préférence au moins 1/10, tout particulièrement préféré au moins 1/8, et
• le rapport (B/A) étant au maximum 1/2, de préférence au maximum 1/3, tout particulièrement préféré au maximum 1/4.

4. Porte tambour selon l'une des revendications précédentes, **caractérisée en ce**
• **que** l'empilage de tôles de stator (11) comportant un anneau fermé (22) et des dents radiaux (23) pour le garnissage des bobines (13), l'empilage de tôles de stator (11) étant composé de plusieurs anneaux de stator empilés et l'anneau de stator individuel étant composé de plusieurs segments de stator (25) agencés l'un à côté de l'autre en direction circonférentielle, et/ou
• **que** l'empilage de tôles de rotor (18) comporte plusieurs anneaux de rotor empilés, l'anneau de rotor individuel étant composé de plusieurs segments de rotor (33) agencés l'un à côté de l'autre en direction circonférentielle, et les aimants permanents (19) étant agencés sur la face radiale intérieure de l'empilage de tôles de rotor (18).

5. Porte tambour selon la revendication 4, **caractérisée en ce**
• **que** les segments de stator (25) sont agencés décalés les uns aux autres de sorte que les butées (26), respectivement entre deux segments de stator (25) dans un anneau de stator, ne se chevauchent pas avec les butées (26) de l'anneau de stator avoisinant, de préférence la partition de l'anneau de stator étant choisie de sorte que les butées (26) se trouvent entre les segments de stator (25) dans les dents (25), et/ou
• **que** les segments de rotor (33) sont agencés décalés les uns aux autres de sorte que les butées (26) entre deux segments de rotor (33) dans un anneau de rotor ne se chevauchent pas avec les butées (26) de l'anneau de rotor avoisinant.

6. Porte tambour selon l'une des revendications 4 ou 5, **caractérisée en ce**
• **que** chaque segment de stator (25), au moins dans la condition non-installée, comprend un angle de segment (H), où H = (360°/G)-I, avec le nombre de segments de stator (G) et l'ange de réduction (I), et/ou
• **que** chaque segment de rotor (33), au moins dans la condition non-installée, comprend un angle de segment (H), où H = (360°/N)-I, avec le nombre de segments de stator (G) et l'ange de réduction (I),
• l'angle de réduction (I) étant entre 0,05° et 1°, de préférence entre 0,1° et 0,8°.

7. Porte tambour selon l'une des revendications 4 ou 5, **caractérisée en ce**
• **que** les segments de stator (25) de plusieurs anneaux de stator ont la même épaisseur de tôle et/ou la même géométrie et/ou le même angle de segment (H), de préférence les segments de stator (25) étant symétriquement spéculaires, et/ou
• **que** les segments de rotor (33) de plusieurs anneaux de rotor ont la même épaisseur de tôle et/ou la même géométrie et/ou le même angle de segment (H), de préférence les segments de rotor (33) étant symétriquement spéculaires.

8. Porte tambour selon l'une des revendications 4 à 7, **caractérisée en ce**
• les têtes des dents (23) sont arrondies avec un rayon de tête (K), le rayon de tête (K) étant dans un plan vertical à l'axe de rotation (4), le rayon de tête (K) étant au moins de 30 mm, de préférence au moins de 40 mm,
• et/ou que les coins des têtes des dents (23) sont arrondis avec un rayon de coin (T), le rayon de coin (T) étant dans un plan vertical à l'axe de rotation (4),
∘ le rayon de coin (T) étant au moins 0,5 mm, de préférence au moins 1 mm, tout particulièrement au moins 1,5 mm, et/ou
∘ le rayon de coin (T) étant au maximum 5 mm, de préférence au maximum 4 mm, tout particulièrement préféré au maximum 3,5 mm,
• et/ou que les dents (23) à la tête ont une largeur de dent (L), la largeur de dent (L) étant définie en direction circonférentielle,
∘ la largeur de dent (L) étant au moins 8 mm, de préférence au moins 10 mm, tout particulièrement préféré au moins 12 mm, et/ou
∘ la largeur de dent (L) tant au maximum 20 mm, de préférence au maximum 18 mm, tout particulièrement préféré au maximum 16 mm.

9. Porte tambour selon l'une des revendications précédentes, **caractérisée en ce que**
• les anneaux de stator, tout particulièrement les segments de stator individuels (25) et/ou les anneaux de rotor, tout particulièrement les segments de rotor (33) individuels, sont reliés au moyen d'éléments de connexion (16) aménagés comme système de tige à bague de serrage,
• le système de tige à bague de serrage individuel comportant un boulon (36), une tête (37) étant aménagée à une extrémité du boulon (36) et une bague de serrage (38) étant pressée sur l'autre extrémité du boulon (36), le boulon (36) étant mis en précontrainte en direction axiale (5) avant de presser la bague de serrage (38), et
• les boulons (36) s'étendant en direction axiale (5) et passant à travers des trous de connexion dans les anneaux de stator ou anneaux de rotor.
